# EUROPÄISCHE PATENTSCHRIFT

(11) **EP 0 536 158 B1**
(45) Veröffentlichungstag und Bekanntmachung des Hinweises auf die Patenterteilung: **01.03.1995**
(21) Anmeldenummer: 91909634.7
(22) Anmeldetag: 27.05.1991
(51) Int. Cl.: F02D 41/14

(54) **Verfahren zum Schutz von Katalysatoren**
Process for protection of catalysts
PROCEDE DE PROTECTION DE CATALYSEURS

(30) Priorität: 27.06.1990 DE 4020383
(43) Veröffentlichungstag der Anmeldung: 14.04.1993
(73) Patentinhaber: ROBERT BOSCH GMBH, 70442 Stuttgart (DE)
(72) Erfinder: FRIESE, Karl-Hermann, D-7250 Leonberg (DE); WIEDENMANN, Hans-Martin, D-7000 Stuttgart 1 (DE); HOETZEL, Gerhard, D-7000 Stuttgart 50 (DE)
(86) Internationale Anmeldenummer: DE9100447
(87) Internationale Veröffentlichungsnummer: WO9200446

(56) Entgegenhaltungen:
- EP-A- 0 309 067
- DE-A- 2 643 739
- DE-A- 3 836 045
- DE-C- 3 733 193

## Beschreibung

### Stand der Technik

Die Erfindung geht aus von einem Verfahren zum Schutz von Katalysatoren für die Abgasreinigung durch Temperaturmessung mit einem Wärmetönungssensor nach der Gattung des Hauptanspruchs. Das Verfahren eignet sich insbesondere zum Einsatz bei Kraftfahrzeugen.

Kraftfahrzeug-Verbrennungsmotoren erzeugen in ihrem Abgas u.a. Kohlenmonoxid, Stickoxide sowie unverbrannte oder teilverbrannte Kohlenwasserstoffe, die zur Luftverunreinigung beitragen. Um die durch diese Stoffe hervorgerufene Luftverunreinigung auf einen Minimalwert herabzudrücken, ist es erforderlich, die Abgase von Kraftfahrzeug-Verbrennungsmotoren weitgehend von diesen Stoffen zu befreien. Das geschieht durch Überführung der schädlichen Anteile des Abgases in die unschädlichen Verbindungen Kohlendioxid, Stickstoff und Wasser, indem man die Abgase einer Nachverbrennung unterwirft, wobei man sie bei Temperaturen oberhalb etwa 600°C über Katalysatoren leitet.

Die Lebensdauer dieser Katalysatoren ist begrenzt. Dies bedeutet, daß ihre katalytische Aktivität nach einer bestimmten Zeit mehr oder weniger rasch nachläßt und die Abgase somit ungereinigt in die Atmosphäre gelangen können. Da die gesetzlichen Abgasvorschriften jedoch während des gesamten Betriebseinsatzes eines Fahrzeuges stets erfüllt sein müssen, ist eine Funktionsüberwachung des Katalysators empfehlenswert. Dieses Überwachungssystem muß dem Fahrer durch ein optisches oder akustisches Signal anzeigen, wenn der Katalysator nicht mehr einwandfrei arbeitet.

Eine Möglichkeit der direkten Überwachung des Katalysators besteht in der Messung des Abbaus einer oder mehrerer Schadstoffkomponenten, wobei man die Konzentration derselben einmal vor und einmal nach dem Katalysator mißt, so daß der Konzentrationsunterschied als Maß für die Funktionsfähigkeit des Katalysators eingesetzt werden kann. Die Messung dieser Schadstoffanteile ist jedoch verhältnismäßig aufwendig und schwierig.

Aus der DE-PS 26 43 739 ist ein Verfahren zur Überwachung der Aktivität von Katalysatoren für die Abgasreinigung durch Temperaturmessung mit Temperaturfühlern bekannt, bei dem über eine Temperaturvergleichsmessung mit Hilfe zweier Temperaturfühler die durch eine am Katalysator ablaufende Reaktion entstehende Wärmetönung gemessen und bei einer Temperaturdifferenz, die anzeigt, daß der Katalysator nicht mehr funktionsfähig ist, ein Warnsignal ausgelöst wird.

Bei dem bekannten Verfahren werden in vorteilhafter Weise für die Temperaturmessung zwei Temperaturfühler verwendet, von denen einer eine katalytisch aktive Oberfläche, der andere dagegen eine katalytisch inaktive Oberfläche aufweist, wobei beide Temperaturfühler ohne sich zu berühren, dicht nebeneinander im Katalysatorsystem oder kurz hinter diesem im Gasraum angeordnet sind.

In Keramikfolientechnik erstellte, als Wärmetönungssensoren verwendbare NTC-Temperaturfühlerelemente zur Verwendung in der Abgasanlage von Verbrennungsmotoren mit einem NTC-Widerstand und Leiterbahnen, die den NTC-Widerstand mit elektrischen Kontaktflächen verbinden, sind beispielsweise aus der DE-OS 37 33 193 bekannt. Sie bestehen aus einem Laminatverbund aus Keramikfolien derart, daß die Umgebungsluft oder elektrolytisch zugepumpter Sauerstofff über einen gegebenenfalls mit einem porösen Material gefüllten Kanal freien Zugang zu dem NTC-Widerstand aus O²⁻-Ionen leitendem Material hat, dieser selbst jedoch hermetisch gegenüber dem Meßgas abgedichtet ist.

In Keramikfolientechnik erstellte, als Wärmetönungssensoren verwendbare PTC-Temperaturfühlerelemente zur Verwendung in der Abgasanlage von Verbrennungsmotoren mit einem PTC-Widerstand sind beispielsweise aus der DE-OS 37 33 192 bekannt.

Sie bestehen aus einem Laminatverbund aus Keramikfolien, in dem der PTC-Widerstand mit Leiterbahnen hermetisch gegenüber dem Meßgas und der Umgebungsluft abgekapselt ist.

### Vorteile der Erfindung

Das erfindungsgemäße Verfahren mit den kennzeichnenden Merkmalen des Hauptanspruchs weist den Vorteil auf, daß der Wärmetönungseffekt, der den Katalysator durch Überhitzung bei zu hohen exothermen Reaktionen, z. B. aufgrund von Zündaussetzern, zerstören kann, bereits vor dem Katalysator in einem Wärmetönungssensor, an dem dieselben exothermen Reaktionen katalytisch ausgelöst werden, ausgenutzt wird.

Durch die Erfindung wird somit der problematische Einbau eines Überwachungssensors, z. B. Temperaturfühlers im Abgaskatalysator selbst vermieden.

Zur Durchführung des erfindungsgemäßen Verfahrens besonders geeignete Wärmetönungssensoren sind in Keramikfolientechnik erstellte Planarsensoren. Vorzugsweise weisen die erfindungsgemäß eingesetzten Wärmetönungssensoren ein oder zwei gleichartige NTC- oder PTC-Widerstände auf, der bzw. die Teil einer Brückenschaltung sind, die bei Überhitzung des einen Widerstandes aufgrund des Ablaufs einer starken exothermen Reaktion und der damit verbundenen Widerstandsänderung verstimmt wird.

Von den z. B. aus den DE-OS 37 33 192 und 37 33 193 bekannten planaren Temperaturfühlerelementen unterscheiden sich die zur Durchführung des Verfahrens verwendeten Wärmetönungssensoren im wesentlichen dadurch, daß mindestens eine äußere Oberfläche eines Temperaturfühlerelementes des Wärmetönungssensors eine Beschichtung mit katalytisch aktivem Material, an dem die gleichen exothermen Reaktionen ausgelöst werden, die auch an dem für die Abgasreinigung verwendeten Katalysator ablaufen, aufweist.

Das Aufbringen des katalytisch aktiven Materials kann auf verschiedene Weise erfolgen.

Ein geeignetes Verfahren zum Aufbringen des katalytisch aktiven Materials besteht darin, zunächst auf mindestens einen Teilbereich einer äußeren Oberfläche des Temperaturfühlerelementes eine poröse Engobeschicht üblicher bekannter Zusammensetzung aufzusintern, z. B. aus 60 Gew.-% Al₂O₃ und 40 Gew.-% ZrO₂, aus 60 Gew.-% Al₂O₃ und 40 Gew.-% CeO₂ oder aus 100 Gew.-% CeO₂. Gegebenenfalls kann dabei ein Stabilisator zugesetzt werden, z. B. Y₂O₃, beispielsweise in einer Konzentration von 4 Mol-%, bezogen auf den ZrO₂- bzw. CeO₂-Anteil. Die Engobeschicht kann dabei durch Auftragen einer pastösen Beschichtungsmasse in Dickschichttechnik erfolgen. Andererseits kann die Engobeschicht jedoch auch mittels einer porös sinternden Keramikfolie entsprechender Zusammensetzung im Laminierverfahren erzeugt werden. Das Aufbringen des katalytisch aktiven Materials kann anschließend durch eine Nachbehandlung mit dem katalytisch aktiven Material erfolgen, wie sie für die Herstellung von Abgaskatalysatoren allgemein bekannt ist, z. B. durch Verwendung von fein-dispersen "Wash coatings" z. B. auf Boehmit-Basis sowie Imprägnieren mit Katalysatormaterial, z. B. auf Pt-Rh-Basis (vgl. "Advances in Catalysis", Band 36, S. 62 ff, Academic Press Inc., San Diego, 1989).

Ein zweites geeignetes Verfahren zum Aufbringen des katalytisch aktiven Materials besteht darin, dem zur Erzeugung der Engobeschicht verwendeten Material das katalytisch aktive Material, z. B. ein Pt- oder Pt-Legierungspulver oder ein Vorkatalysatormaterial, z. B. metallorganische Verbindungen, aus denen beim Sinterprozeß katalytisch aktive Materialien gebildet werden, direkt zuzusetzen.

Ein drittes geeignetes Verfahren zum Aufbringen des katalytisch aktiven Materials besteht darin, auf mindestens einen Teilbereich einer äußeren Oberfläche des Temperaturfühlerelementes eine plasmagespritzte poröse Deckschicht auf zutragen, z. B. eine Mg-Spinellschicht oder eine Schicht der für Engobeschichten angegebenen Zusammensetzung. Dem Plasmaspritzmaterial kann wiederum ein Katalysator- oder Vorkatalysatormaterial zugesetzt werden, z. B. ein Pt- oder Pt-Legierungspulver oder metallorganische Verbindungen, aus denen katalytisch aktive Materialien beim Sinter- bzw. Plasmaspritzprozeß entstehen.

Vorzugsweise setzt man dem Plasmaspritzmaterial oder dem zur Erzeugung der Engobeschicht verwendeten Material 0,5 bis 30 Vol.-%, insbesondere 5-10 Vol.-% Katalysatormaterial zu.

Der Zusatz des Katalysatormaterials zum Plasmaspritzmaterial oder zu dem zur Erzeugung der Engobeschicht verwendeten Material hat gegenüber einer Nachbehandlung einer zunächst erzeugten Engobeschicht oder plasmagespritzten Deckschicht den Vorteil einer erhöhten Lebensdauer bei Übertemperatur. Die katalytische Aktivität ist jedoch in der Regel etwas geringer.

Im einfachsten Falle weist ein zur Durchführung des erfindungsgemäßen Verfahrens verwendete Wärmetönungssensor somit ein Temperaturfühlerelement mit einem NTC- oder PTC-Widerstand auf, das auf mindestens einem Teilbereich einer seiner beiden äußeren Oberflächen eine Beschichtung mit einem katalytisch aktiven Material, wie im Vorstehenden beschrieben, aufweist.

Zur Durchführung des erfindungsgemäßen Verfahrens wird ein Wärmetönungssensor verwendet, in dem ein Temperaturfühlerelement der beschriebenen Art (Temperaturfühlerelement 1) mit einem weiteren Temperaturfühlerelement (Temperaturfühlerelement 2) kombiniert wird. Im Gegensatz zum Temperaturfühlerelement 1 weist das Temperaturfühlerelement 2 jedoch keine katalytisch aktive Oberfläche auf. Beide Temperaturfühlerelemente können dabei durch einen Abstandshalter, z. B. aus einem Keramiksubstrat voneinander getrennt und in einem üblichen Sensorgehäuse untergebracht sein.

In diesem Falle dient das Temperaturfühlerelement 1 zur Anzeige der Abgastemperatur, während das Temperaturfühlerelement 2 der Erfassung der Wärmetönung der katalytisch ausgelösten Abgasreaktionen dient.

Gemäß einer zweiten Ausgestaltung setzt man einen Wärmetönungssensor mit zwei Temperaturfühlerelementen der beschriebenen Art, jedoch in monolithischer Ausführung ein, wobei der Wärmetönungssensor durch Zusammenlaminieren der einzelnen, die beiden Temperaturfühlerelemente bildenden Folien hergestellt wird.

Vorzugsweise trennt man dabei die Temperaturfühlerelemente 1 und 2 durch eine porös sinternde Keramikfolie, z. B. auf ZrO₂-Basis mit einem Porenbildnerzusatz, z. B. Theobrominzusatz. Die porös sinternde Keramikfolie wirkt dabei im Wärmetönungssensor als Wärmedämmschicht zwischen den beiden Temperaturfühlerelementen.

Gemäß einer dritten Ausgestaltung verwendet man zur Durchführung des erfindungsgemäßen Verfahrens einen Wärmetönungssensor mit zwei Temperaturfühlerelementen der beschriebenen Art, wobei man die Temperaturfühlerelemente diesmal jedoch nicht übereinander sondern parallel zueinander anordnet.

Gemäß einer vierten Ausgestaltung verwendet man zur Durchführung des erfindungsgemäßen Verfahrens einen Wärmetönungssensor aus einem Temperaturfühlerelement mit einer Beschichtung aus katalytisch aktivem Material auf seiner äußeren Oberfläche und einem beheizten λ-Sensorelement. In diesem Falle dient der Innenwiderstand des λ-Sensorelementes, das von dem Temperaturfühlerelement durch ein Keramiksubstrat als Abstandshalter getrennt ist, als Referenz-Widerstand. Der Luftreferenzkanal für das λ-Sensorelement kann dabei in die als Abstandshalter dienende Keramikfolie eingestanzt sein.

Gemäß einer fünften Ausgestaltung verwendet man zur Durchführung des erfindungsgemäßen Verfahrens ein Wärmetönungssensor wie im Falle der vierten Ausgestaltung, jedoch in monolithischer Ausgestaltung, vorzugsweise mit einer porös sinternden Folie zwischen Temperaturfühlerelement und λ-Sensorelement. Die porös sinternde Folie kann dabei z. B. aus einer porös sinternden ZrO₂-Keramikfolie bestehen. Die porös sinternde Keramikfolie wirkt dabei als Wärmedämmschicht zwischen den beiden Fühlerelementen. Die Abgaselektrode liegt im Bereich der porös sinternden Folie, durch deren Poren das Abgas zutritt; die Referenzelektrode liegt im hermetisch zum Abgas abgeschlossenen Referenzkanal. Der darüberliegende Heizer beheizt beide Elektroden.

### Zeichnung

Die Figuren dienen der näheren Erläuterung der Erfindung. Im einzelnen sind dargestellt in:
- Fig. 1: ein zur Durchführung des erfindungsgemäßen Verfahrens geeigneter Wärmetönungssensor im Schnitt in schematischer Darstellung;
- Fig. 2: ein zur Durchführung des erfindungsgemäßen Verfahrens geeigneter Wärmetönungssensor in monolithischer Ausführung im Schnitt in schematischer Darstellung;
- Fig. 3: ein zur Durchführung des erfindungsgemäßen Verfahrens geeigneter Wärmetönungssensor in monolithischer Ausführung mit Parallelanordnung der Temperaturfühlerelemente in Aufsicht in schematischer Darstellung;
- Fig. 4: der schematische Aufbau eines zur Durchführung des erfindungsgemäßen Verfahrens geeigneten Wärmetönungssensors;
- Fig. 5: eine weitere Ausführungsform eines zur Durchführung des erfindungsgemäßen Verfahrens geeigneten Wärmetönungssensors im Schnitt in schematischer Darstellung;
- Fig. 6: die in Fig. 5 dargestellte Ausführungsform eines Wärmetönungssensors, jedoch in monolithischer Ausführung;
- Fig. 7a: eine weitere Ausführungsform eines zur Durchführung des erfindungsgemäßen Verfahrens geeigneten Wärmetönungssensors im Schnitt in schematischer Darstellung;
- Fig. 7b: die in Fig. 7a dargestellte Ausführungsform in Aufsicht.

Die Sensorgehäuse, in denen die Wärmetönungssensoren untergebracht sind, wurden der Einfachheit halber weggelassen. Geeignete Gehäuse sind bekannt, z. B. aus zunderfestem Stahl.

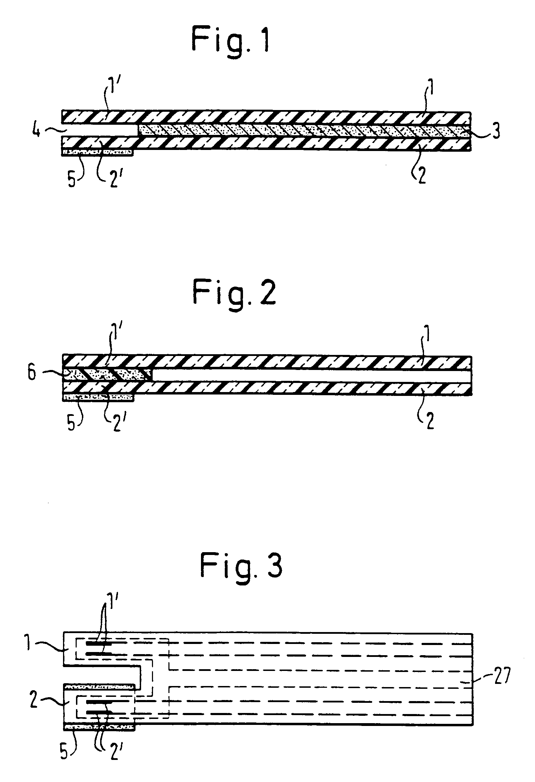

Der in Fig. 1 schematisch dargestellte Wärmetönungssensor besteht aus zwei Temperaturfühlerelementen 1 und 2, beispielsweise NTC-Temperaturfühlerelementen des aus der DE-OS 37 33 192 bekannten Typs oder PTC-Temperaturfühlerelementen des aus der DE-OS 37 33 193 bekannten Typs. Die beiden Temperaturfühlerelemente sind dabei durch einen Abstandshalter 3 voneinander getrennt. Der Abstandshalter 3 besteht in vorteilhafter Weise aus einem Keramiksubstrat, z. B. einer Al₂O₃-Folie.

Die Position der Widerstände ist mit 1' bzw. 2' angedeutet.

Im Falle der in Fig. 1 dargestellten Ausführungsform weist die äußere Oberfläche des Temperaturfühlerelementes 2 im Bereich des Widerstandselementes 2' eine katalytisch aktive Beschichtung 5 auf. Gegebenenfalls kann auch die gegenüberliegende Oberfläche des Temperaturfühlerelementes 2 im Bereich des Abgaskanals 4 eine katalytisch aktive Beschichtung aufweisen.

Im Falle dieser Ausführungsform dient das Temperaturfühlerelement 1 zur Anzeige der Abgastemperatur und das Temperaturfühlerelement 2 erfaßt die Wärmetönung der katalytisch ausgelösten Abgasreaktionen. Die Temperaturfühleranschlüsse werden der Einfachheit halber wie auch im Falle der in Fig. 2 dargestellten Ausführungsform weggelassen.

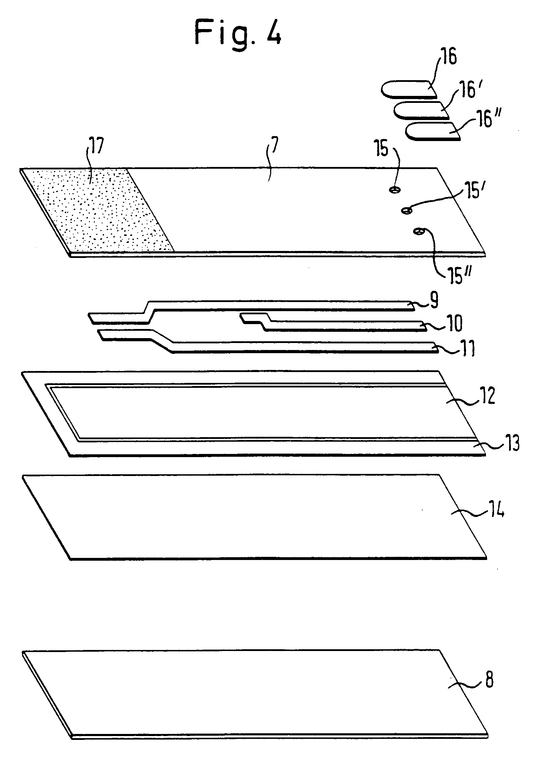

Der in Fig. 2 schematisch dargestellte Wärmetönungssensor unterscheidet sich von dem in Fig. 1 dargestellten Wärmetönungssensor im wesentlichen durch einen monolithischen Aufbau. Während im Falle des in Fig. 1 dargestellten Wärmetönungssensors zwei Temperaturfühlerelemente unter Zwischenschaltung des Abstandshalters 3 zu einem Wärmetönungssensor zusammengefügt werden, wird der in Fig. 2 dargestellte Wärmetönungssensor durch Zusammenlaminieren und anschließendem Zusammensintern entsprechender Folien, wie es im folgenden im Zusammenhang mit Fig. 4 näher beschrieben wird, erhalten.

Bei der Herstellung des in Fig. 2 dargestellten Wärmetönungssensors verfährt man in der Weise, daß man zwischen die die beiden Temperaturfühlerelemente 1 und 2 bildenden Folien eine porös sinternde Keramikfolie 6 legt, z. B. eine ZrO₂-Folie, die einen Porenbildner, z. B. Theobromin oder eine andere unter Sinterbedingungen verbrennende, zersetzbare oder verdampfbare Substanz enthält. Die porös sinternde Keramikfolie 6 wirkt im Wärmetönungssensor dabei als Wärmedämmschicht zwischen den beiden Fühlerelementen 1 und 2.

Bei der in Fig. 3 schematisch dargestellten Ausführungsform mit monolithischem Aufbau und Luftreferenzkanal 27 sind die Temperaturfühlerelemente 1 und 2 parallel zueinander angeordnet. Im Falle der dargestellten Ausführungsform weist nur das Temperaturfühlerelement 2 eine katalytisch aktive Beschichtung 5 auf. Gegebenenfalls kann eine ähnliche Beschichtung, jedoch ohne katalytisch aktive Stoffe, auch auf das Temperaturfühlerelement 1 aufgebracht werden.

Fig. 4 veranschaulicht den Aufbau eines zur Durchführung des erfindungsgemäßen Verfahrens geeigneten Wärmetönungssensors in monolithischer Ausführung durch Integration von Zwei Temperaturfühlerelementen in einem Wärmetönungssensor, wobei ein Temperaturfühlerelement eine katalytisch aktive Beschichtung aufweist.

Im einzelnen besteht der Wärmetönungssensor aus den beiden Folien 7 und 8, z. B. aus mit Y₂O₃ stabilisiertem ZrO₂ (YSZ), den Zuleitungen 9, 10 und 11. z. B. Pt- oder Pd/Pt-Cermetschichten, der porös sinternden Isolationschicht 12 z. B. aus Al₂O₃ vorzugsweise mit einem Porenbildner, beispielsweise Theobromin und einem Dichterahmen 13, z. B. aus mit Y₂O₅ stabilisiertem ZrO₂ sowie der Zwischenschicht 14, z. B. aus mit Y₂O₃ stabilisiertem ZrO₂.

Im Falle dieses Wärmetönungssensors wird das NTC-Temperaturfühlerelement 1 aus der Folie 7 und den Zuleitungen 9 und 10 gebildet und das Wärmetönungselement 2 aus der Folie 7 und den Zuleitungen 10 und 11.

Die Folie 7 weist Durchkontaktierungen 15, 15' und 15'' sowie elektrische Kontaktflächen 16, 16' und 16'' auf und ist auf ihrer äußeren Oberfläche in dem Bereich 17 mit katalytisch aktivem Material beschichtet. Gegebenenfalls kann zusätzlich auch die Folie 8 auf ihrer äußeren Oberfläche gegenüber dem Bereich 17 eine Beschichtung aus katalytisch aktivem Material aufweisen.

Im Falle des dargestellten Wärmetönungssensors erfolgt die Luftzuführung über die porös sinternde Schicht 12. Die Luftzufuhr kann gegebenenfalls aber auch über einen in eine Folie eingestanzten Luftzuführungskanal erfolgen.

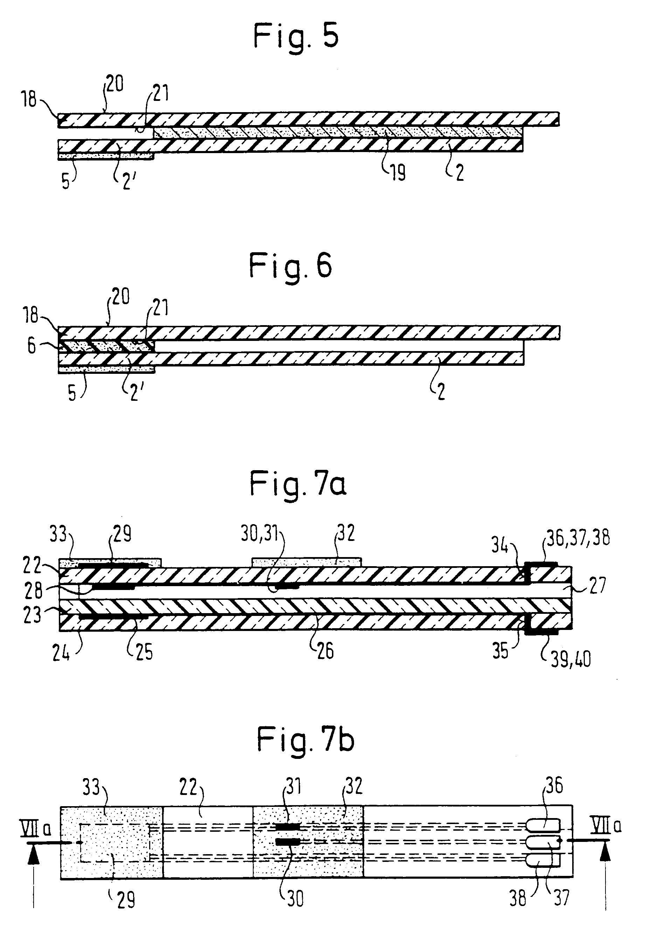

Der in Fig. 5 schematisch dargestellte Wärmetönungssensor zur Durchführung des erfindungsgemäßen Verfahrens besteht aus einem Temperaturfühlerelement 2 mit katalytisch aktiver Beschichtung 5 und einem beheizbaren λ-Sensorelement 18, das von dem Temperaturfühlerelement 2 durch ein Keramiksubstrat 19 als Abstandshalter getrennt ist. Das λ-Sensorelement 18 mit der Heizerseite 20 und der Sensorseite 21 weist ferner zwei nicht dargestellte Heizeranschlüsse und zwei nicht dargestellte Sensoranschlüsse auf und das Temperaturfühlerelement 2 zwei nicht dargestellte Temperaturfühleranschlüsse.

Der in Fig. 6 schematisch dargestellte Wärmetönungssensor zur Durchführung des erfindungsgemäßen Verfahrens unterscheidet sich von dem in Fig. 5 dargestellten Wärmetönungssensor im wesentlichen durch seinen monolithischen Aufbau. Er besteht wiederum aus einem Temperaturfühlerelement 2 mit katalytisch aktiver Beschichtung 5 und einem λ-Sensorelement 18 und einer als Abstandshalter dienenden porös sinternden Keramikfolie 6, z. B, ZrO₂-Keramikfolie. Die Herstellung eines solchen Wärmetönungssensors erfolgt durch Zusammenlaminieren der zum Aufbau der beiden Elemente erforderlichen Folien, wobei zum Aufbau des λ-Sensorelementes mindestens zwei Folien und zum Aufbau des Temperaturfühlerelementes ebenfalls wiederum mindestens zwei Folien erforderlich sind. Die als Abstandshalter dienende porös sinternde Folie 6 dient wiederum als Wärmedämmschicht zwischen den Fühlerelementen und hier gleichzeitig als Schutzschicht für die Abgaselektrode des λ-Sensorelementes.

Der in den Fig. 7a und 7b schematisch dargestellte Wärmetönungssensor zur Durchführung des erfindungsgemäßen Verfahrens stellt eine rationelle Kombination aus einem beheizbaren λ-Sensorelement und einem Temperaturfühlerelement dar. Der Wärmetönungssensor besteht im wesentlichen aus den zusammenlaminierten Folien 22, 23 und 24, dem Heizer 25 mit den Heizerzuleitungen 26, dem Luftreferenzkanal 27, der Innenelektrode 28, der Außenelektrode 29, dem NTC-Widerstand 30, der katalytischen Beschichtung 32 und der porösen Schutzschicht 33, z. B. Mg-Spinellschicht über der Außenelektrode 29. Die Folie 22 weist ferner zwei Durchkontaktierungen 34 für die Zuleitungen des NTC-Widerstandes 30 sowie für die mit einer NTC-Widerstandszuleitung verbundene Zuleitung der Innenelektrode 28; die Folie 24 und zwei Durchkontaktierungen 35 für die Heizerzuleitungen 26 auf. Der elektrische Anschluß der Elektroden, der Sensorzelle und des NTC-Widerstandes erfolgt über die elektrischen Kontakte 36, 37 und 38 und der Anschluß des Heizers über die Kontakte 39 und 40 auf der Gegenseite des Sensorelementes.

Zur Herstellung von erfindungsgemäß einsetzbaren planaren Wärmetönungssensoren des im vorstehenden beschrieben Typs eignen sich Keramikfolien auf Festelektrolytbasis und auf Isolatorkeramikbasis sowie Verfahren und Methoden zum Beschichten, Durchkontaktieren, Zusammenlaminieren, Sintern usw., wie sie aus den DE-OS 37 33 192 und 37 33 193 für die Herstellung von Temperaturfühlerelementen bekannt sind. Im Falle der Kombination eines Temperaturfühlerelementes mit einem λ-Sensorelement kann das Sensorelement nach Methoden hergestellt werden, wie sie z. B. aus der EPO 309 067 bekannt sind.

Die erfindungsgemäßen Wärmetönungssensoren können in üblichen Gehäusen untergebracht werden, wie sie beispielsweise näher in der DE-OS 32 06 903 beschrieben werden.

### Beispiel

Die Herstellung eines Wärmetönungssensors des in Fig. 4 dargestellten Aufbaues erfolgte ausgehend von 2 mit Y₂O₃ stabilisierten ZrO₂-Basisfolien einer Stärke von jeweils 0,5 mm. Zunächst wurden in die Folie 7 in bekannter Weise Durchkontaktierungslöcher 15,15' und 15'' eingestanzt, Durchkontaktierungen eingebracht und elektrische Kontaktflächen 16, 16' und 16'''' aufgedruckt. Auf die diesen elektrischen Kontaktflächen gegenüberliegende Seite der Folie 7 wurden dann durch Aufdrucken die elektrischen Zuleitungen 9, 10 und 11 sowie die Isolationsschicht 12 und der hermetisch dichtende Rahmen 13 aufgebracht. Die auf diese Weise bedruckte Folie 7 wurde dann mit der mit der interlaminaren Binderschicht 14 bedruckten Folie 8 zusammenlaminiert. Nach Bildung des Verbundkörpers durch Zusammenlaminieren und Aufbringen der katalytisch aktiven Beschichtung 17 wurde der Verbundkörper durch 4-stündiges Erhitzen auf eine Temperatur von etwa 1400°C gesintert.

Die Herstellung der Durchkontaktierungen erfolgte dadurch, daß in die ausgestanzten Durchkontaktierungslöcher 15, 15' und 15'' zunächst eine Al₂-O₃-Isolationsschicht sowie darüber eine elektrisch leitende Pt/Al₂O₃-Schicht eingebracht wurde.

Zum Aufdrucken der elektrischen Kontaktflächen wurde eine Paste aus einer Pt-Nb₂O₅/YSZ-Mischung verwendet.

Zur Erzeugung der elektrischen Zuleitungen 9, 10 und 11 dienten Pt-Cermet oder Pt-Legierungscermetpasten.

Die Schicht 12 bestand aus einer etwa 50 »m starken porös sinternden Theobromin enthaltenden Al₂O₃-Druckschicht mit einem Dichterahmen 13 für die hermetische Abdichtung der mittels der elektrischen Zuleitungen 9, 10 und 11 gebildeten Widerstände aus mit Y₂O₃ stabilisiertem ZrO₂. Die Schicht 14 bestand aus mit Y₂O₃-stabilisiertem ZrO₂ und war etwa 20 »m dick.

Beim Sinterprozeß verbrannte das Theobromin unter Ausbildung einer porösen, einen Luftzutritt zu den Widerständen gewährenden Schicht. Der Luftzutritt kann jedoch selbstverständlich auch über einen in eine zwischen die Folien 7 und 8 zwischengelegte Folie eingestanzten Luftkanal erfolgen.

Das Aufbringen der katalytisch aktiven Beschichtung 17 erfolgte dadurch, daß nach dem Laminierprozeß eine Pt-YSZ-Cermetschicht und darüber eine porös sinternde YSZ-Schutzschicht mit Theobrominzusatz als Porenbildner aufgedruckt wurden.

Nach Durchführung des Sinterprozesses betrug die Schichtstärke der katalytisch aktiven Beschichtung etwa 20 »m mit einer Schutzschicht von etwa 30 »m.

Der dem Sinterprozeß unterworfene Verbundkörper wurde dann in ein Gehäuse des aus aus der DE-OS 32 06 903 bekannten Typs eingebracht, wobei die beiden Widerstände der mittels der Zuleitungen 9, 10 und 11 gebildeten Temperaturfühlerelemente Teil einer Wheatstone'schen Brückenschaltung waren, die bei Überhitzung des einen Widerstandes aufgrund einer starken exothermen Reaktion und der damit verbundenen Widerstandsänderung verstimmt wurde.

## Patentansprüche

1. Verfahren zur Feststellung gefährlicher Betriebsbedingungen von Katalysatoren für die Abgasreinigung durch Temperaturmessung mit einem Wärmetönungssensor, wobei man vor den Katalysator in den Abgasstrom oder einen Teil hiervon den Wärmetönungssensor mit mindestens zwei NTC- oder PTC-Widerständen sowie mit einer Beschichtung des Sensors im Bereich von mindestens einem dieser Widerstände mit katalytisch aktivem Material, an dem die gleichen exothermen Reaktionen ausgelöst werden, die auch an dem für die Abgasreinigung verwendeten Katalysator ablaufen, einführt und mit dem Wärmetönungssensor die bei Überhitzung des im Bereich der katalytischen Beschichtung liegenden Widerstandes aufgrund zu starker exothermer Reaktion bewirkte Widerstandsänderung erfaßt.

2. Verfahren nach Anspruch 1, dadurch gekennzeichnet, daß man einen Wärmetönungssensor mit zwei gleichartigen NTC- oder PTC-Widerständen verwendet, die Teil einer Brückenschaltung sind, die bei Überhitzung des einen Widerstandes aufgrund einer starken exothermen Reaktion und der damit verbundenen Widerstandsänderung verstimmt wird.

3. Verfahren nach Anspruch 1 oder 2, dadurch gekennzeichnet, daß man als Wärmetönungssensor einen in Keramikfolientechnik erstellten Planarsensor verwendet.

4. Verfahren nach einem der vorhergehenden Ansprüche, dadurch gekennzeichnet, daß einer der zwei NTC-Widerstände des Wärmetönungssensors der NTC-Widerstand einer Lambda-Sonde ist.

## Claims

1. Method for detecting dangerous operating conditions in exhaust-gas cleaning catalysts by measuring temperature with a heat-effect sensor, in which the heat-effect sensor containing at least two NTC or PTC resistors and having a coating of catalytically active material in the region of at least one of said resistors, at which material the same exothermic reactions are brought about which also proceed at the catalyst used for the exhaust gas cleaning, is introduced into the exhaust-gas stream or a part thereof upstream of the catalyst and determines by the heat-effect sensor the change in resistance brought about during overheating of the resistor situated in the region of the catalytic coating as a result of unduly intense exothermic reaction.

2. Method according to Claim 1, characterized in that a heat-effect sensor is used which has two similar NTC or PTC resistors which are part of a bridge circuit whose balance is disturbed if one of the resistors overheats as a result of an intense exothermic reaction and of the resistance change associated therewith.

3. Method according to Claim 1 or 2, characterized in that a planar sensor fabricated in a ceramic-film technique is used as heat-effect sensor.

4. Method according to one of the preceding claims, characterized in that one of the two NTC resistors of the heat-effect sensor is the NTC resistor of a lambda probe.

## Revendications

1. Procédé pour déterminer les conditions de fonctionnement dangereuses pour des catalyseurs dans des installations d'épuration de gaz d'échappement, par mesure de température à l'aide d'un capteur de recalescence, selon lequel, en amont du catalyseur, on introduit dans la veine des gaz d'échappement une partie de ceux-ci, le capteur de recalescence avec au moins deux résistances à caractéristiques NTC ou PTC ainsi qu'avec un revêtement du capteur dans la zone d'au moins l'une de ses résistances, ce revêtement étant en matière catalytiquement active déclenchant les mêmes réactions exothermiques que celles qui se déroulent au niveau du catalyseur servant à l'épuration des gaz d'échappement et on détecte avec le capteur de recalescence, la variation de résistance lors de la surchauffe de la résistance située au niveau du revêtement catalytique et provoquée par une réaction fortement exothermique.

2. Procédé selon la revendication 1, caractérisé en ce qu'on utilise un capteur de recalescence à deux résistances à caractéristiques NTC ou PTC de même type, intégré dans un montage en pont qui se déséquilibre en cas de surchauffe d'une résistance provoquée par une réaction fortement exothermique et entraînant une variation de résistance.

3. Procédé selon la revendication 1 ou 2, caractérisé en ce que le capteur de recalescence est un capteur planaire obtenu par la technique des feuilles de céramique.

4. Procédé selon l'une des revendications précédentes, caractérisé en ce que l'une des deux résistances NTC du capteur de recalescence est la résistance NTC d'une sonde lambda.
